(19) **Europäisches Patentamt**
**European Patent Office**
**Office européen des brevets**

(11) **EP 4 478 259 A1**

(12) **EUROPEAN PATENT APPLICATION**

(43) Date of publication:
**18.12.2024 Bulletin 2024/51**

(21) Application number: **23179822.4**

(22) Date of filing: **16.06.2023**

(51) International Patent Classification (IPC):
***G06N 3/094*** *(2023.01)*

(52) Cooperative Patent Classification (CPC):
**G06N 3/094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Robert Bosch GmbH**
  **70442 Stuttgart (DE)**
- **Rheinische Friedrich-Wilhelms-Universität Bonn**
  **53113 Bonn (DE)**

(72) Inventors:
- **Schmidt, Frank A.**
  **71229 Leonberg (DE)**
- **Bernard, Florian V.**
  **66663 Merzig (DE)**
- **Nurlanov, Zhakshylyk A.**
  **37081 Goettingen (DE)**

(74) Representative: **Bee, Joachim**
  **Robert Bosch GmbH**
  **C/IPA**
  **P.O. Box 30 02 20**
  **70442 Stuttgart (DE)**

(54) **DEVICE AND COMPUTER IMPLEMENTED METHOD FOR MACHINE LEARNING**

(57)    A device (100) and a computer implemented method for machine learning, wherein the method comprises providing an artificial neural network (106) that is configured to determine an output of the artificial neural network (106) depending on an input of the artificial neural network (106) and depending on weights of the artificial neural network (106), providing a sample for the input and a ground truth for the output, wherein the input is defined depending on the sample and depending on a perturbation, determining a perturbation, in particular a largest perturbation, for that the output indicates the ground truth, determining the weights of the artificial neural network (106) depending on a loss that is defined depending on the output and the ground truth.

Fig. 1

EP 4 478 259 A1

**Description**

Background

The invention relates to a device and a computer implemented method for machine learning.
Artificial neural networks are used in machine learning in particular for solving classification tasks. An artificial neural network may be trained for solving a particular classification task.

Disclosure of the invention

The device and the computer implemented method according to the independent claims provides machine learning based on an artificial neural network for classification. The machine learning achieves an increased robustness of the classification with respect to worst case changes in an output of the artificial neural network for input of the artificial neural network that is unseen in training. The machine learning mitigates a drop in the accuracy of the classification of input of the artificial neural network that is seen in training.
Computer implemented method for machine learning, wherein the method comprises providing an artificial neural network that is configured to determine an output of the artificial neural network depending on an input of the artificial neural network and depending on weights of the artificial neural network, providing a sample for the input and a ground truth for the output, wherein the input is defined depending on the sample and depending on a perturbation, determining a perturbation, in particular a largest perturbation, for that the output indicates the ground truth, determining the weights of the artificial neural network depending on a loss that is defined depending on the output and the ground truth.
The method may comprise capturing the input or the sample with a sensor. The input may be used in inference with the pretrained artificial neural network or for additional machine learning with real world input.
The method may comprise outputting, depending on the output, a classification or semantic segmentation indicative of an object, in particular a traffic sign, a road surface, a pedestrian, or a vehicle. The output may be used in inference or in machine learning.
The method may comprise actuating a technical system, in particular a robot, a vehicle, a power tool, a manufacturing machine, a household appliance, a personal assist system or an access control system, depending on the output. The technical system may be actuated in inference or in machine learning.
The method may comprise determining the largest perturbation within a predetermined perturbation radius. This increases the robustness within a given perturbation radius.
Determining the perturbation may comprise determining the input, wherein determining the input comprises adding the perturbation to the sample. This means the perturbation is preferably determined without using derivatives from the perturbed samples.
The device for machine learning comprises at least one processor and at least one memory, wherein the at least one processor is configured to execute instructions that, when executed by the at least one processor, cause the at least one processor to execute the method for machine learning, wherein the at least one memory is configured to store the instructions and an artificial neural network that is configured to determine an output depending on an input and depending on weights of the artificial neural network.
The device may comprise at least one sensor, in particular a camera, a radar sensor, a LiDAR sensor, an infrared sensor, an ultrasound sensor, a motion sensor, a thermal sensor, or an audio sensor, that is configured to capture the input, in particular a digital image, e.g., a video image, a radar image, a LiDAR image, an infrared image, an ultrasound image, a motion sensor image, a thermal sensor image, and/or audio data. This means the device is integrated in the real world by the sensor for capturing real world sensor data.
The device may comprise an actuator for controlling a technical system, in particular a robot, a vehicle, a power tool, a manufacturing machine, a household appliance, a personal assist system or an access control system, according to the output. This means the device is integrated in the real world by using an actuator for controlling the technical system.
A computer program may comprise computer readable instructions that, when executed by a computer cause the computer to execute the method.
Further advantageous embodiments are derived from the following description and the drawing. In the drawing:

Fig. 1    schematically depicts a device for machine learning,
Fig. 2    depicts a flow chart of a method for machine learning.

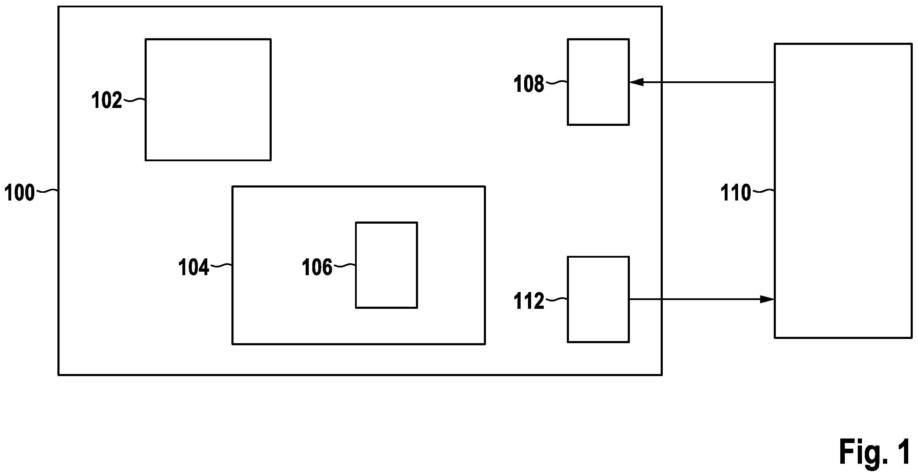

Figure 1 schematically depicts a device 100 for machine learning. The device 100 comprises at least one processor 102 and at least one memory 104. The at least one processor 102 is configured to execute instructions that, when executed by the at least one processor 102, cause the at least one processor 102 to execute a method for machine learning. The at least one memory 104 is configured to store the instructions.

The machine learning is based on an artificial neural network 106. The at least one memory 104 may be configured to store the artificial neural network 106.

The device 100 may comprise at least one sensor 108. The at least one sensor 108 may be configured to capture an input for the artificial neural network 106.

The at least one sensor 108 may comprise a camera, a radar sensor, a LiDAR sensor, an infrared sensor, an ultrasound sensor, a motion sensor, a thermal sensor, or an audio sensor.

The input may be a digital image, e.g., a video image, a radar image, a LiDAR image, an infrared image, an ultrasound image, a motion sensor image, a thermal sensor image, and/or audio data.

The artificial neural network 106 in the example is configured for determining an output for classifying the input. The output may be a classification, e.g., of 10 classes, of 200 classes, of the input.

The machine learning may comprise training the artificial neural network 106 to solve a classification task to enable autonomous driving. The classification task may be an object classification, e.g., a traffic sign classification.

The machine learning, in particular the output, is not limited to classification. The machine learning, i.e., the output, may comprise semantic segmentation of the input.

The classification or the semantic segmentation task is not limited to traffic sign classification. The classification or the semantic segmentation task may be regarding road surfaces, pedestrians, vehicles.

The machine learning is not limited to an application in the field of autonomous driving. The machine learning may apply to a technical system 110. The technical system 110 is for example a physical system, in particular a robot, a vehicle, a power tool, a manufacturing machine, a household appliance, a personal assist system or an access control system.

The device 100 for example comprises an actuator 112 for controlling the technical system 110 according to the output.

The artificial neural network 106 is trained with data points that are sampled from a distribution $\mathcal{D}$. Data point in this context refers to a pair of a sample for an input x of the artificial neural network and an output y for a prediction ŷ of the artificial neural network 106. The prediction ŷ of the artificial neural network 106 may be defined by a function $f(\cdot, w)$ that is parametrized by weights w. The artificial neural network 106 may configured to map the input x with the function $f(x, w)$ to the prediction ŷ.

The training comprises optimizing the weights w to increase robustness in particular for previously unseen data points and to avoid losing accuracy for unchanged data points.

Each sample drawn from the distribution $\mathcal{D}$ may be classified differently well by the artificial neural network 106, in particular when the artificial neural network 106 is not fully trained. The training aims to solve the following robust loss function:

$$\min_{w} \mathbb{E}_{(x,y)\sim\mathcal{D}} \left[ \max_{\substack{\|\delta\|\leq\epsilon \\ \max_{i} f(x+\delta;w)_i \leq f(x+\delta;w)_y}} L(f(x+\delta;w), y) \right]$$

wherein i is a prediction ŷ of the artificial neural network 106 that is not equal to the sampled output y, and wherein a norm $\|\cdot\|$ and a perturbation radius $\varepsilon$ and the loss L are given. The loss L measures a quality of the artificial neural network. The loss L may be a norm of a difference between the output $f(x + \delta; w)$ of the artificial neural network for the input x with an added perturbation $\delta$ and the ground truth y. This means, the aim of the training is to find a perturbation $\delta$ that solves the maximization problem.

Solving the robust loss function is NP-hard.

The training may comprise finding the perturbation $\delta$ that minimizes a lower bound of the robust loss function. The training may comprise finding the perturbation $\delta$ that minimizes an upper bound of the robust loss function. The training may comprise a convex combination with a loss function

$$\min_{w} \mathbb{E}_{(x,y)\sim\mathcal{D}} \left[ \theta \cdot \left( \max_{\|\delta\|\leq\epsilon} L(f(x+\delta;w), y) \right) + (1-\theta) \cdot \left( L(f(x+\delta;w), y) \right) \right]$$

wherein $0 \leq \theta \leq 1$ is a hyper parameter that controls the weighting between satisfying a specification, i.e., the loss L and fitting the data.

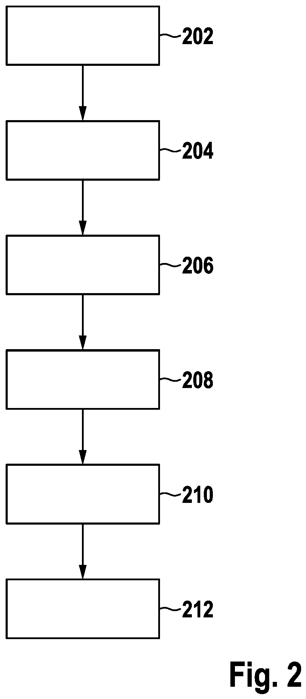

Figure 2 depicts a flow chart with exemplary steps of the method.

The method comprises a step 200.

The step 200 comprises providing the artificial neural network. The artificial neural network is configured to determine an output of the artificial neural network depending on an input x of the artificial neural network and depending on weights w of the artificial neural network. According to the example, the input x can be of arbitrary dimension. The output comprises i entries $f(x + \delta; w)_i$. According to the example, *i* ranges from 1 to k. In the example, each entry is associated with one class.

A classification decision is made for example, by determining which of these k entries is the largest.

The classification decision may be
$$i^* = \underset{i}{\mathrm{argmax}}\, f(x; w)_i$$
. Here $f(x; w)_i$ denotes the i-th entry of the output: $f(x + \delta; w)_i$.

The method comprises a step 202.

The step 202 comprises sampling a data point *(x, y)* from the distribution $\mathcal{D}$. According to the example, *y* is associated with the entry $f(x + \delta; w)_y$ of the output.

The method comprises a step 204.

The step 204 comprises determining the perturbation $\delta$.

In the example, the method comprises determining the perturbation $\delta$ within the perturbation radius $\epsilon$: $\|\delta\| \le \epsilon$. In the example, the method comprises determining the largest perturbation $\delta$ for that the output indicates the ground truth y. For example, the perturbation $\delta$ is determined such that the entry $f(x + \delta; w)_y$ that is associated with the ground truth is larger than or equal to a maximum of the entries $f(x + \delta; w)_i$

$$\max_i f(x + \delta; w)_i \le f(x + \delta; w)_y$$

The perturbation $\delta$ is for example determined such that
$$arg\max_i f(x + \delta; w)_i = y$$
.

According to an example, the perturbation $\delta$ is determined with BrentQ according to Brent, R. P., Algorithms for Minimization Without Derivatives. Englewood Cliffs, NJ: Prentice-Hall, 1973. Ch. 3-4.

This means, determining the perturbation $\delta$ comprises determining the input $x + \delta$. This means, determining the input $x + \delta$ comprises adding the perturbation $\delta$ to the sample *x*.

The method comprises a step 206.

The step 206 comprises determining the gradient of $L(f(x + \delta; w), y)$ with respect to the weights *w*.

The method comprises a step 208.

The step 208 comprises updating the weights *w,* e.g., with an optimizer.

The method provides a better accuracy at the same level of robustness. The method provides a higher accuracy at a zero robustness than comparable methods.

The steps 202 to 208 may be repeated to train the artificial neural network with data points.

The method may comprise a step 210.

The step 210 may comprise providing capturing an input for the artificial neural network 106 with the sensor 108.

The method may comprise a step 212.

The step 212 may comprise outputting, depending on the output, with the artificial neural network 106 a classification or semantic segmentation for the captured input indicative of an object in the captured input, in particular a traffic sign a regarding road surface, a pedestrian, a vehicle.

The step 212 may comprise actuating an autonomous vehicle depending on the output for the captured input.

The method may comprise actuating the autonomous vehicle depending on the class of the object. For example, the method may comprise to classify the object into a traffic sign indicative of a given speed limit and actuate the autonomous vehicle to slow down or increase the speed of the autonomous vehicle from a current speed of the autonomous vehicle automatically to the given speed limit depending on the output.

The method is not limited to acting with regard to a speed limit. The method may comprise slowing down or stopping the autonomous vehicle in case the class of the object indicates a stop sign or a pedestrian in the way of the vehicle.

The method is not limited to autonomous driving. The autonomous vehicle is an example for the technical system 110. The method is may comprise controlling the technical system 110, e.g., to control a speed of a movement or a stop of a movement of the technical system 110 or a part thereof.


**Claims**

1.  Computer implemented method for machine learning, **characterized in that** the method comprises providing (200) an artificial neural network that is configured to determine an output of the artificial neural network depending on an input of the artificial neural network (106) and depending on weights of the artificial neural network (106), providing (202) a sample for the input and a ground truth for the output, wherein the input is defined depending on the sample and depending on a perturbation, determining (204) a perturbation, in particular a largest perturbation, for that the output indicates the ground truth, determining (206, 208) the weights of the artificial neural network (106) depending on a loss that is defined depending on the output and the ground truth.

2. The method according to claim 1, **characterized in that** the method comprises capturing the input or the sample with a sensor (108).

3. The method according to one of the previous claims, **characterized in that** the method comprises outputting (210), depending on the output, a classification or semantic segmentation indicative of an object, in particular a traffic sign, a road surface, a pedestrian, or a vehicle.

4. The method according to one of the previous claims, **characterized in that** the method comprises actuating (212) a technical system (110), in particular a robot, a vehicle, a power tool, a manufacturing machine, a household appliance, a personal assist system or an access control system, depending on the output.

5. The method according to one of the previous claims, **characterized in that** the method comprises determining (204) the largest perturbation within a predetermined perturbation radius.

6. The method according to one of the previous claims, **characterized in that** the determining (204) the perturbation comprises determining the input, wherein determining the input comprises adding the perturbation to the sample.

7. Device (100) for machine learning, **characterized in that** the device (100) comprises at least one processor (102) and at least one memory (104), wherein the at least one processor (102) is configured to execute instructions that, when executed by the at least one processor (102), cause the at least one processor (102) to execute the method for machine learning according to one of the claims 1 to 6, wherein the at least one memory (104) is configured to store the instructions and an artificial neural network (106) that is configured to determine an output depending on an input and depending on weights of the artificial neural network (106).

8. The device (100) according to claim 7, **characterized in that** device (100) comprises at least one sensor (108), in particular a camera, a radar sensor, a LiDAR sensor, an infrared sensor, an ultrasound sensor, a motion sensor, a thermal sensor, or an audio sensor, that is configured to capture the input, in particular a digital image, e.g. a video image, a radar image, a LiDAR image, an infrared image, an ultrasound image, a motion sensor image, a thermal sensor image, and/or audio data.

9. The device (100) according to one of the claims 7 or 8, **characterized in that** the device (100) comprises an actuator (112) for controlling a technical system (110), in particular a robot, a vehicle, a power tool, a manufacturing machine, a household appliance, a personal assist system or an access control system, according to the output.

10. Computer program, **characterized in that** the computer program comprises computer readable instructions that, when executed by a computer cause the computer to execute the method according to one of the claims 1 to 6.

EP 4 478 259 A1

**Fig. 1**

**Fig. 2**

**Europäisches Patentamt**
**European Patent Office**
**Office européen des brevets**

# EUROPEAN SEARCH REPORT

Application Number

EP 23 17 9822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ian J Goodfellow ET AL: "Explaining and Harnessing Adversarial Examples", , 20 March 2015 (2015-03-20), XP055535149, Retrieved from the Internet: URL:https://arxiv.org/pdf/1412.6572.pdf [retrieved on 2018-12-17] * the whole document * | 1-10 | INV. G06N3/094 |
| X | ZHANG CHAOYUN ET AL: "A Convolutional Neural Network for Leaves Recognition Using Data Augmentation", 2015 IEEE INTERNATIONAL CONFERENCE ON COMPUTER AND INFORMATION TECHNOLOGY; UBIQUITOUS COMPUTING AND COMMUNICATIONS; DEPENDABLE, AUTONOMIC AND SECURE COMPUTING; PERVASIVE INTELLIGENCE AND COMPUTING, IEEE, 26 October 2015 (2015-10-26), pages 2143-2150, XP032836254, DOI: 10.1109/CIT/IUCC/DASC/PICOM.2015.318 [retrieved on 2015-12-22] * the whole document * | 1-10 | |
| X | Stephan Zheng ET AL: "Improving the Robustness of Deep Neural Networks via Stability Training", , 1 July 2016 (2016-07-01), pages 1-9, XP093105717, Retrieved from the Internet: URL:https://www.cv-foundation.org/openacce ss/content_cvpr_2016/papers/Zheng_Improvin g_the_Robustness_CVPR_2016_paper.pdf [retrieved on 2023-11-27] * the whole document * | 1-10 | |

**TECHNICAL FIELDS SEARCHED (IPC)**

G06N

-/--

The present search report has been drawn up for all claims

| Place of search | Date of completion of the search | Examiner |
|---|---|---|
| The Hague | 30 November 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 23 17 9822 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAUGROS ALFRED ET AL: "Addressing Neural Network Robustness with Mixup and Targeted Labeling Adversarial Training", 28 February 2020 (2020-02-28), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 178 – 195, XP047589846, * the whole document * | 1-10 | |
| A | WANG JIE ET AL: "The Quantitative Relationship between Adversarial Training and Robustness of CNN Model", 2020 7TH INTERNATIONAL CONFERENCE ON DEPENDABLE SYSTEMS AND THEIR APPLICATIONS (DSA), IEEE, 28 November 2020 (2020-11-28), pages 543-549, XP033886164, DOI: 10.1109/DSA51864.2020.00092 [retrieved on 2021-01-20] * the whole document * | 1-10 | **TECHNICAL FIELDS SEARCHED (IPC)** |
| A | QIAN ZHUANG ET AL: "A survey of robust adversarial training in pattern recognition: Fundamental, theory, and methodologies", PATTERN RECOGNITION, ELSEVIER, GB, vol. 131, 5 July 2022 (2022-07-05), XP087131593, ISSN: 0031-3203, DOI: 10.1016/J.PATCOG.2022.108889 [retrieved on 2022-07-05] * the whole document * | 1-10 | |

The present search report has been drawn up for all claims

| Place of search | Date of completion of the search | Examiner |
|---|---|---|
| The Hague | 30 November 2023 | Moro Pérez, Gonzalo |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRENT, R. P.** Algorithms for Minimization Without Derivatives. Prentice-Hall, 1973